# EUROPÄISCHE PATENTSCHRIFT

(11) **EP 1 792 156 B1**
(45) Veröffentlichungstag und Bekanntmachung des Hinweises auf die Patenterteilung: **11.07.2012**
(21) Anmeldenummer: 05747994.1
(22) Anmeldetag: 03.05.2005
(51) Int. Cl.: F23Q 7/00, G01L 23/22

(54) **VORRICHTUNG ZUR ERFASSUNG DES DRUCKS IN EINEM BRENNRAUM EINER VERBRENNUNGSKRAFTMASCHINE**
DEVICE FOR DETECTING THE PRESSURE PREVAILING IN A COMBUSTION CHAMBER OF AN INTERNAL COMBUSTION ENGINE
DISPOSITIF PERMETTANT DE DETECTER LA PRESSION REGNANT DANS LA CHAMBRE DE COMBUSTION D'UN MOTEUR A COMBUSTION INTERNE

(30) Priorität: 10.09.2004 DE 102004043874
(43) Veröffentlichungstag der Anmeldung: 06.06.2007
(73) Patentinhaber: ROBERT BOSCH GMBH, 70442 Stuttgart (DE)
(72) Erfinder: SCHOLZEN, Holger, 70469 Stuttgart (DE); ENGELHARDT, Joerg, 71254 Ditzingen (DE); ROESSER, Christian, 71723 Grossbottwar-Winzerhausen (DE); DIDRA, Hans-Peter, 72127 Kusterdingen-Jettenburg (DE); LEDERMANN, Markus, 76149 Stuttgart (DE)
(86) Internationale Anmeldenummer: PCT/EP2005/052021
(87) Internationale Veröffentlichungsnummer: WO 2006/027280

(56) Entgegenhaltungen:
- EP-A- 1 111 360
- EP-A- 1 134 385
- WO-A-2004/070334
- DE-C2- 19 680 912
- US-A- 4 576 052
- US-A- 5 402 683

## Beschreibung

### Technisches Gebiet

Um ein optimales Betriebsverhalten von selbstzündenden Verbrennungskraftmaschinen zu gewährleisten, welches sich durch einen niedrigen Kraftstoffverbrauch und niedrige Emissionen bei gleichzeitig hoher Leistung der Verbrennungskraftmaschine auszeichnet, ist eine aufwendige Motorsteuerung erforderlich. Für die Motorsteuerung ist es erforderlich, während des Betriebs der Verbrennungskraftmaschine verschiedene Betriebsparameter zu erfassen. Einer dieser Betriebsparameter ist der Druck im Brennraum der Verbrennungskraftmaschine.

### Stand der Technik

Zur Messung des Druckes in Brennräumen von Verbrennungskraftmaschinen ist aus DE-C 100 35 536 eine Zündkerze mit darin aufgenommenem Drucksensor zur Verwendung in fremdgezündeten Verbrennungskraftmaschinen bekannt. Der Drucksensor ist dabei im Gehäuse der Zündkerze aufgenommen. Die Zündkerze ist so ausgebildet, dass der Drucksensor neben der Zündeinheit an der brennraumzugewandten Seite der Zündkerze angeordnet ist Diese Anordnung hat jedoch den Nachteil, dass die Querschnittsfläche im Vergleich zu einer Zündkerze ohne Drucksensor vergrößert ist. Bei Mehrventilmotoren ist es jedoch aufgrund der sehr beengten Verhältnisse im Zylinderkopf nicht immer möglich, Bauteile mit vergrößerter Querschnittsfläche einzusetzen.

Eine Vorrichtung, bei welcher der Sensor oberhalb einer Funktionseinheit in einem Gehäuse eingesetzt ist, ist aus DE-A 102 05 819 bekannt. Bei dieser Vorrichtung wirkt der Druck im Brennraum auf die Funktionseinheit, welche den Druck an den Sensor weitergibt. Das Sensorsignal wird an eine Auswerteschaltung weitergegeben, die außerhalb der Vorrichtung angeordnet ist. Diese Anordnung hat jedoch den Nachteil, dass ein schwaches Sensorsignal, wie es in der Regel von einem Sensor geliefert wird, störanfällig ist und deshalb zu falschen Messwerten führen kann.

Eine vergleichbare Vorrichtung, bei welcher die Funktionseinheit ein Glühstift einer Glühstiftkerze für eine selbstzündende Verbrennungskraftmaschine ist, ist aus DE-C 196 80 912 bekannt. Bei dieser ist der Drucksensor zwischen dem Glühstift und einem Fixierglied der Glühstiftkerze aufgenommen. Bei Druckbeaufschlagung auf das Heizelement wird der Drucksensor durch das Fixierglied an seiner Position gehalten und so der Druck gemessen.

Die so gemessenen Daten werden an einer außerhalb der Glühstiftkerze positionierte Auswerteeinheit übermittelt. Hieraus resultiert ein schwaches Signal, welches vom Drucksensor übertragen wird und welches deshalb störanfällig ist. Ein weiterer Nachteil der außerhalb der Glühstiftkerze angebrachter Auswerteeinheit ist, dass dies zu einer Zunahme der Baugröße im rückwärtigen Bereich führt. Der hierfür erforderliche Bauraum steht jedoch bei Mehrventilmotoren vielfach nicht zur Verfügung.

Eine Vorrichtung, bei welcher der Drucksensor eine Glühstiftkerze umschließt und auf der Außenwandung eines Zylinders aufliegt, ist in EP-A 1 134 385 offenbart. Hierbei wird der Druck im Brennraum durch die Verformung der Brennraumwand bestimmt. Aufgrund der indirekten Messung des Drucks über die Verformung der Zylinderwand erfüllt der Sensor jedoch nicht die Anforderungen, die von der Motorsteuerung an die Genauigkeit der Messwerterfassung gestellt werden.

DE 19680912 C2 offenbart eine Vorrichtung zur Erfassung des Drucks in einem Brennraum eines Dieselmotors, bei der in eine Glühstiftkerze mit einem Glühstift ein Drucksensor integriert ist, der an einem Fixierglied des Glühstifts angeordnet ist.

Eine weitere Vorrichtung zur Erfassung des Drucks in einem Brennraum eines Dieselmotors geht aus EP 1111360 A2 hervor, bei der eine Auswerteschaltung für den Drucksensor im Gehäuse der Glühstiftkerze untergebracht ist

Eine Halbleiterschaltung eines Messwertumformers zur Druckbestimmung mit auf einem Siliziumsubstrat aufgebrachten Dehnungsmessstreifen als Druckaufnehmer und einer Auswerteschaltung zur Signalverarbeitung der Signale des Druckaufnehmer geht aus US 4576052 A hervor.

### Darstellung der Erfindung

Bei der erfindungsgemäßen Vorrichtung zu Erfassung des Drucks in einem Brennraum einer selbstzündenden Verbrennungskraftmaschine, ist der Drucksensor ein piezoresistiver Silizium-Druckmesschip und das Gehäuse der Glühstiftkerze ist hinter dem Drucksensor so geteilt, dass der Drucksensor bei geöffnetem Gehäuse leicht zugänglich ist. Durch die Teilung des Gehäuses wird die Montage des Drucksensors und der Abgleich des Drucksensors vereinfacht. Außerdem sind durch den piezoresistiver Silizium-Druckmesschip die Herstellungskosten niedrig und die Genauigkeit ist vergleichsweise groß. So ist ein Gesamtfehler über die Lebensdauer des Messchips kleiner als 1 % möglich.

Der Drucksensor kann dabei entweder mit der dem Glühstift zugewandten Seite des Fixiergliedes oder mit der dem Glühstift abgewandten Seite verbunden sein. In den Drucksensor ist eine Auswerteschaltung integriert. Durch die Integration der Auswerteschaltung in den Drucksensor wird ein bereits verstärktes Signal aus der Vorrichtung übertragen. Hierdurch wird die Störanfälligkeit vermindert und somit die Messgenauigkeit erhöht. Durch die Aufnahme des Drucksensors zwischen dem Glühstift und dem Fixierglied wird weiterhin vermieden, dass der Querschnitt der Vorrichtung vergrößert wird und somit kein zusätzlicher Bauraum in der Zylinderwandung erforderlich ist.

Der Drucksensor kann brennraumzugewandt oder brennraumabgewandt in das Gehäuse montiert werden. Bei brennraumabgewandter Montage des Drucksensors stützt sich der Glühstift auf eine Membran auf, die mit dem Gehäuse fest verbunden ist. Die Verbindung der Membran mit dem Gehäuse kann dabei z.B. durch eine umlaufende Schweißnaht erfolgen. Auf der Rückseite der Membran ist der Druckmesschip aufgebracht und misst dabei die Verformung der Membran, die durch die vom Glühstift übertragene Gaskraft verformt wird. Zur Montage wird der Glühstift bevorzugt zusammen mit der Membran in das Gehäuse eingefügt, dann die für die Abdichtung notwendige Vorspannkraft aufgebracht und abschließend die Membran mit dem Gehäuse verbunden. Auf diese Weise ist gewährleisten, dass die Vorspannkraft erhalten bleibt, jedoch nicht zu einer fehlerbehafteten Messung des Sensors führt, da dieser erst nach der Montage der Membran auf diese aufgebracht wird. Nach dem Aufbringen des Drucksensors wird der Sensor abgeglichen.

Die Kontaktierung des Sensors kann mittels Bondung auf Kontaktpads und von dort mit Hilfe von vier Kontakten auf ein Kunststoffteil mit eingelegten Leiterbahnen und schließlich zum Stecker erfolgen. Das Kunststoffteil mit den eingelegten Leiterbahnen ist z.B. das Fixierglied.

Der Glühstrom zum Aufheizen des Glühstifts kann z.B. mit Hilfe einer Zuleitung durch das Kunststoffteil und einem Kontaktelement erfolgen, das zum Gehäuse hin isoliert und zum Glühstift hin elektrisch leitfähig ist.

Bei brennraumzugewandter Montage des Drucksensors ist dieser vorzugsweise auf einem Metall- oder Keramikträger aufgebracht, der die notwendigen Durchkontaktierungen aufweist. Bevorzugt sind Metalle oder Keramiken mit einem ähnlichen Wärmeausdehnungskoeffizienten wie dem des Drucksensors, der vorzugsweise aus Silizium gefertigt ist, um Verspannungen aufgrund der Temperaturbelastung zu vermeiden. Geeignet sind zum Beispiel Kovar oder Aluminiumoxid.

Nach der Montage wird der Sensor mittels Bondung mit den Durchkontaktierungen elektrisch verbunden. In einer ersten Ausführungsform wird der Metall- oder Keramikträger zusammen mit dem Drucksensor und dem Glühstift in das Gehäuse eingefügt und nach Aufbringung einer Vorspannung wird der Metall- oder Keramikträger mit dem Gehäuse verbunden. Hierbel ist jedoch darauf zu achten, dass der Drucksensor durch die aufgebrachte Vorspannkraft nicht geschädigt wird.

In einer zweiten Ausführungsvariante wird nach der Montage eines Dichtungselements und des Glühstifts im Gehäuse die zur Montage erforderliche Vorspannkraft weggenommen und anschließend der Drucksensor samt Metall- oder Keramikträger mit stark reduzierter Vorspannkraft montiert Aufgrund der reduzierten Vorspannkraft auf den Drucksensor wird dieser nicht zu hoch belastet und so vermieden, dass er zerstört wird. Auch wird die Offsetdrift durch die Vorspannung reduziert, die für den Abgleich vorgehalten werden muss. Bei der Montage mit reduzierter Vorspannkraft ist jedoch darauf zu achten, dass das Dichtelement seine Wirkung entfaltet.

Bei brennraumzugewandter Montage des Drucksensors muss der Metall- oder Keramikträger über Durchkontaktierungen verfügen, wobei diese bei einem Metallträger vorzugsweise mit Hilfe von Glasdurchführungen, bei einem Keramikträger mit Durchkontaktierungen wie bei einem Standardhybrid realisiert werden können. Von diesen Durchkontaktierungen kann der elektrische Anschluss in Richtung des Steckers durch Bondung auf ein als Fixierglied wirkendes Kunststoffteil mit Metalleinlegeteilen oder mit vergleichbaren, dem Fachmann bekannten Kontaktiertechniken realisiert werden.

Das Dichtelement, welches zwischen dem Glühstift und dem Gehäuse aufgenommen ist, ist in einer ersten Ausführungsform eine Graphithülse. Um die Dichtheit zu gewährleisten, werden zur Montage die Graphithülse und der Glühstift in das Gehäuse eingeführt und anschließend der Glühstift mit einer Vorspannkraft von ca. 1000 N gegen die Graphithülse gedrückt.

In einer bevorzugten Ausführungsform ist das Dichtungselement, welches zwischen dem Glühstift und dem Gehäuse eingesetzt wird, elastisch. Durch die Verwendung eines elastischen Dichtungselements wird Reibung zwischen dem Glühstift und dem Gehäuse vermieden, die zu einer Hysterese und damit zu einem nicht abgleichbaren Fehler bei der Druckmessung führt. Bereits eine Hysterese von nur wenigen Prozenten des Vollausschlags des Drucksensors führt dazu, dass das Sensorsignal nicht mehr zur Regelung der angestrebten Motorfunktionen verwendet werden kann. Ein weiterer Vorteil des elastischen Dichtungselements liegt darin, dass die Eigenschaften über die Lebensdauer konstant bleiben, da aufgrund der Elastizität Verschleiß- oder Setzeffekte vermieden werden. Aus diesem Grund ist auch eine Sensordrift aufgrund der Lebensdauereffekte, z.B. Alterung, des Dichtungselements nicht zu erwarten.

Ein geeignetes Dichtungselement ist z.B. ein elastischer Metallring, der auf den Glühstift aufgeschoben werden kann und gemeinsam mit diesem zur Montage in das Gehäuse eingefügt wird. Anschließend wird auf den Glühstift eine Vorspannkraft aufgeprägt, um die Dichtheit zu gewährleisten. Besonders geeignet als Material für den elastischen Metallring sind weiche, duktile Metalle, wie zum Beispiel Kupfer.

Der als Dichtungselement verwendete elastische Metallring kann z.B. mit einem kreisförmigen Vollquerschnitt, mit einem Hohlquerschnitt, als C-Profil mit Innen- oder Außenöffnung oder auch als Tellerfeder ausgebildet sein. Auch kann der elastische Metallring jeden weiteren, dem Fachmann bekannten Querschnitt annehmen.

### Zeichnung

Im Folgenden wird die Erfindung anhand einer Zeichnung näher beschrieben.

Es zeigt:
- Figur 1: eine Glühstiftkerze mit darin aufgenommenem Drucksensor in einer ersten Ausführungsform,
- Figur 2: eine Glühstiftkerze mit darin aufgenommenem Drucksensor in einer zweiten Ausführungsform,
- Figur 3: eine Glühstiftkerze mit darin aufgenommenem Drucksensor und elastischem Dichtungselement,
- Figuren 4.1, 4.2, 4.3, 4.4, 4.5: verschiedene Ausführungsformen eines elastischen Dichtelements.

### Ausführungsvarianten

Um bei einer selbstzündenden Verbrennungskraftmaschine die zum Start erforderliche Temperatur zu erreichen, wird eine Glühstiftkerze 1 mit einem elektrisch beheizbaren Glühstift 2 eingesetzt. Der Glühstift 2 ist z.B. aus zwei heizgas- und korrosionsbeständigen Keramikmassen mit unterschiedlichen elektrischen Eigenschaften gefertigt. Die erste Keramikmasse ist elektrisch isolierend und bildet eine mittlere Schicht. Die zweite Keramikmasse weist einen geringen elektrischen Widerstand auf und umschließt die mittlere Schicht u-förmig. Dabei erstrecken sich die Schenkel der u-förmigen Keramikschicht in axialer Richtung des Glühstiftes. Zum Aufheizen wird Strom durch die elektrisch leitende Keramikmasse geleitet. Der Strom fließt dabei entlang eines Schenkels der u-förmigen Keramikmasse, um die Spitze des Glühstiftes herum und entlang des zweiten Schenkels wieder zurück. An der Spitze des Glühstiftes, an der die Schenkel miteinander verbunden sind, ist die Stärke der u-förmigen Keramikmasse so gering, dass der aus dem geringen Querschnitt resultierende elektrische Widerstand dazu führt, dass die Spitze des Glühstiftes bei fließendem elektrischen Strom glüht.

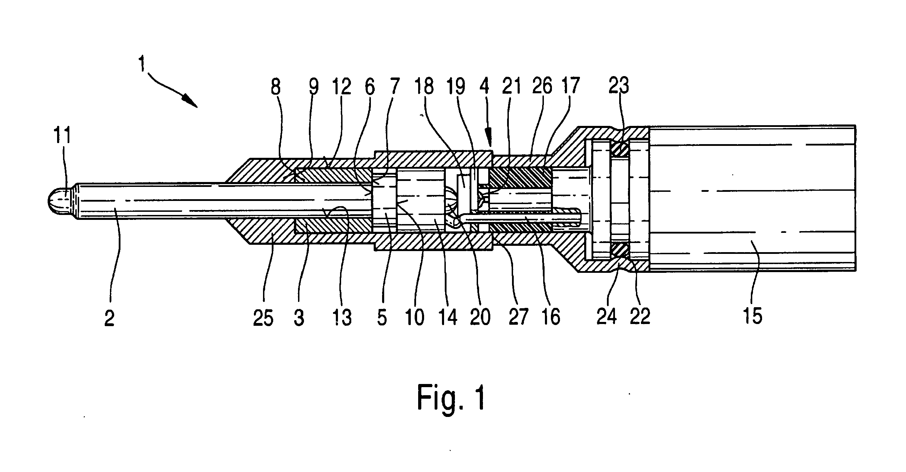

Der Glühstift 2 ist in einem Gehäuse 4 aufgenommen. Damit auch bei den hohen, im Brennraum auftretenden Drücken kein Kraftstoff-Luftgemisch über undichte Stellen an der Glühkerze in die Umgebung gelangt, ist zwischen dem Gehäuse 4 und dem Glühstift 2 ein Dichtungselement 3 angeordnet. In der in Figur 1 dargestellten Ausführungsform ist das Dichtungselement 3 eine Graphithülse. Eine dichte Verbindung zwischen Glühstift 2 und Gehäuse 4 wird erreicht, wenn das Dichtungselement 3 zwischen Gehäuse 4 und Glühstift 2 eingepresst wird. Hierzu ist an dem Glühstift 2 eine stufenförmige Erweiterung 5 ausgebildet Die stufenförmige Erweiterung 5 kann zum Beispiel durch den Glühstift selbst oder durch ein mit dem Glühstift 2 verbundenen Element, zum Beispiel einer den Glühstift 2 umschließenden Metallhülse, gebildet werden. Eine Stirnseite 6 der stufenförmigen Erweiterung 5 liegt an einer Stirnseite 7 des Dichtungselements 3 an. Mit einer zweiten Stirnseite 8 ist das Dichtungselement 3 gegen eine Anschlagfläche 9 im Gehäuse 4 gestellt. Sobald auf eine zweite Stirnseite 10 der stufenförmigen Erweiterung 5 eine Kraft in Richtung der Glühspitze 11 des Glühstifts 2 aufgebracht wird, wird das Dichtungselement 3 zwischen die Anschlagfläche 9 und die erste Stirnseite 6 der stufenförmigen Erweiterung gepresst. Hierdurch wird der Raum zwischen dem Glühstift 2 und dem Gehäuse 4 abgedichtet

Die Vorspannkraft, mit welcher der Glühstift 2 gegen das Dichtungselement 3 gepresst wird, beträgt vorzugsweise etwa 1000 N.

An der der Glühspitze 11 abgewandten Seite schließt sich an die stufenförmige Erweiterung 5 des Glühstifts 2 ein Zwischenring 14 an, über welchen der Glühstift 2 mit dem zur Erwärmung erforderlichen Strom versorgt wird.

Der Strom wird dem Zwischenring 14 von einem Stecker 15 über eine Zuleitung 16 zugeführt. Die Zuleitung 16 ist durch ein Fixierglied 17 hindurchgeführt. Das Fixierglied 17 ist vorzugsweise als Kunststoffteil mit Metalleinlegeteilen ausgebildet, wobei die Metalleinlegeteile zur Stromversorgung des Glühstifts 2 und zur Übermittlung der Messsignale eines Drucksensors 18 dienen.

Bei der in Figur 1 dargestellten Ausführungsform ist der Drucksensor 18 brennraumzugewandt montiert. Hierzu ist der Drucksensor 18 auf einem Träger 19 aufgebracht. Der Träger 19 ist vorzugsweise ein Metall- oder Keramikträger, der bei der Montage der Glühstiftkerze 1 fest mit dem Gehäuse 4 verbunden wird.

Der Glühstift 2 ist an der brennraumabgewandten Seite mit einem halbkugelförmigen Zapfen 20 abgeschlossen. Der Zapfen 20 drückt bereits im Ruhezustand mit einer definierten, konstanten Kraft gegen den Drucksensor 18.

Die Messwerte des Drucksensors 18 werden über Datenleitungen 21, die vorzugsweise ebenfalls als Metalleinlegeteile in dem als Kunststoffteil ausgebildeten Fixierglied 17 aufgenommen sind, an den Stecker 15 übertragen. Vom Stecker 15 können die Messwerte abgegriffen werden.

Die Übertragung der Messwerte von Drucksensor 18 zu den Datenleitungen 21 erfolgt vorzugsweise mittels Durchkontaktierungen durch den Träger 19. Wenn der Träger 19 aus Metall gefertigt ist, werden die Durchkontaktierungen vorzugsweise mit Hilfe von Glasdurchführungen realisiert. Bei einem aus Keramik gefertigten Träger 19 sind vorzugsweise metallische Leiter, wie bei einem Standardhybrid, im Träger 19 aufgenommen.

Um den Stecker 15 bei Vibrationen und Erschütterungen gegen ein unbeabsichtigtes Lösen zu sichern, ist im Stecker 15 eine Nut 22 ausgebildet. In der Nut 22 ist ein Dichtring 23, welcher vorzugsweise aus einem elastischen Material gefertigt ist, z.B. ein O-Ring, aufgenommen. An der Position der Nut 22 ist im Gehäuse 4 eine Einschnürstelle 24 ausgebildet Diese greift in die Nut 22 ein und führt so zu einer stabilen Verbindung des Steckers 15 mit dem Gehäuse 4.

Bei einer Druckerhöhung im hier nicht dargestellten Brennraum der selbstzündenden Verbrennungskraftmaschine wirkt ein Druck auf den Glühstift 2. Die Glühstiftkerze 1 ist fest mit der Brennraumwand verbunden. Die Verbindung der Glühstiftkerze 1 und der Brennraumwand erfolgt vorzugsweise kraftschlüssig durch Verschraubung. Aufgrund der auf den Glühstift 2 wirkenden Druckkraft wird dieser in Richtung des Steckers 15 gedrückt. Hierdurch nimmt die vom Zapfen 20 auf den Drucksensor 18 wirkende Kraft zu. Diese Kraft ist proportional zum Druck im Brennraum und wird vom Drucksensor 18 erfasst.

Um zu vermeiden, dass aufgrund von in den Datenleitungen induzierten Fremdströmen, z.B. durch unerwünschte Magnetfelder oder durch überlagerte Frequenzen Messfehler auftreten, ist in den Drucksensor 18 eine Auswerteeinheit integriert. In der Auswerteeinheit wird gleichzeitig das Signal verstärkt, so dass vom Drucksensor 18 ein bereits verstärktes Signal zum Stecker 15 übertragen wird. Dieses verstärkte Signal ist wesentlich weniger störanfällig als ein unverstärktes Signal.

Der Drucksensor 18 ist vorzugsweise ein piezoresistiver Silizium-Druckmesschip. Es hat sich gezeigt, dass dieser ursprünglich für den Niederdruckbereich konzipierte Druckmesschip auch im Hochdruckbereich eingesetzt werden kann. Vorteilhaft ist, dass piezoresistive Silizium-Druckmesschips kostengünstig hergestellt werden können und über die Lebensdauer ein Gesamtfehler kleiner als 1 % möglich ist. Auch ist bei den piezorestiven Silizium-Druckmesschips die Auswerteschaltung bereits auf dem Messchip integriert. Dies führt zu einer Vereinfachung des Sensoraufbaus durch den Wegfall eines zusätzlichen Schahungsträgers mit Auswerteschaltung und zu einer Reduktion der Baugröße im rückwärtigen Bereich der Glühstiftkerze 1.

In einer bevorzugten Ausführungsform ist das Gehäuse 4 der Glühstiftkerze 1 auf der dem Stecker 15 zugewandten Seite kurz hinter dem Träger 19 in ein unteres Gehäuseteil 25 und ein oberes Gehäuseteil 26 geteilt. Die Teilungsstelle ist mit Bezugszeichen 27 gekennzeichnet An der Teilungsstelle 27 werden das untere Gehäuseteil 25 und das obere Gehäuseteil 26 kraft- oder stoffschlüssig miteinander verbunden. In einer bevorzugten Ausführungsform erfolgt die Verbindung stoffschlüssig durch Verschweißen.

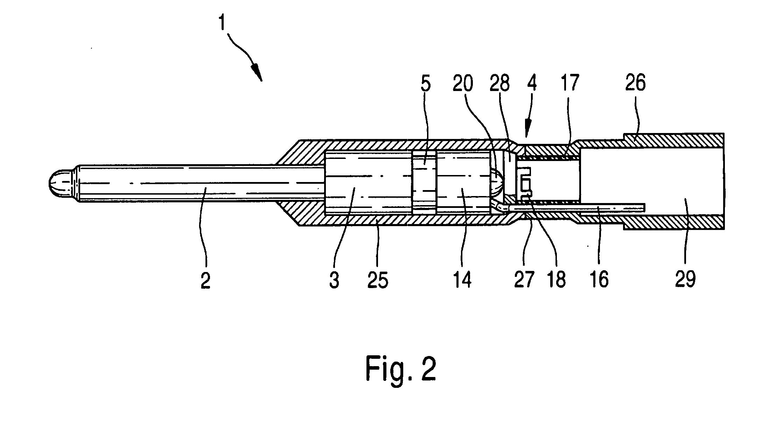

In Figur 2 ist eine Glühstiftkerze in einer zweiten Ausführungsform dargestellt.

Bei der in Figur 2 dargestellten Ausführungsform ist der Drucksensor 18 brennraumabgewandt in die Glühstiftkerze 1 montiert. Auch bei der hier dargestellten Ausführungsform ist das Gehäuse 4 in ein unteres Gehäuseteil 25 und ein oberes Gehäuseteil 26 geteilt. Zur Montage wird zunächst der Glühstift 2 mitsamt dem Dichtungselement 3 in das untere Gehäuseteil 25 eingeführt. Durch Aufbringen einer Vorspannkraft von vorzugsweise etwa 1000 N wird der Dichtring 3 zwischen dem unteren Gehäuseteil 25 und der stufenförmigen Erweiterung 5 am Glühstift 2 eingepresst. Auf diese Weise wird eine gas- und druckdichte Verbindung erreicht. Auf der dem Brennraum abgewandten Seite ist am Glühstift 2 ebenso wie in der Ausführungsform gemäß Figur 1 der Zapfen 20 ausgebildet. Die Stromversorgung des Glühstifts 2 erfolgt auch in der Ausführungsform nach Figur 2 über den Zwischenring 14 und die Zuleitung 16.

Im Unterschied zu der in Figur 1 dargestellten Ausführungsform ist hier eine Membran 28 in das untere Gehäuseteil 25 eingebracht, gegen welche sich der Glühstift 2 mit dem Ansatz 20 abstützt. Die Membran 28 ist fest mit dem unteren Gehäuseteil 25 verbunden. Die Verbindung erfolgt vorzugsweise stoffschlüssig, z.B. durch Schweißen. Nach der Montage der Membran 28 wird auf die dem Glühstift 2 abgewandte Seite der Membran 28 der Drucksensor 18 aufgebracht. Sobald auf den Glühstift 2 ein Druck ausgeübt wird, bewegt sich dieser in das untere Gehäuseteil 25 hinein und übt mit seinem Zapfen 20 eine Kraft auf die Membran 28 aus. Hierdurch verformt sich die Membran 28. Die Verformung wird durch den Drucksensor 18 gemessen. In den Drucksensor 18 ist bereits eine Auswerteeinheit integriert. Auf diese Weise wird ein verstärktes Signal aus der Glühstiftkerze 1 übertragen und so die Störanfälligkeit für den übertragenen Messwert reduziert.

Ein Vorteil der brennraumabgewandten Montage des Drucksensors 18 gegenüber der brennraumzugewandten Montage des Drucksensors 18 ist, dass der Drucksensor 18 erst nach der Montage der Membran 28 aufgebracht wird. Hierdurch wird gewährleistet, dass die Vorspannkraft erhalten bleibt, diese jedoch nicht auf den Drucksensor 18 wirkt. Nach dem Aufbringen des Drucksensors 18 wird dieser abgeglichen.

Die Kontaktierung des Drucksensors 18 kann z.B. durch Bondung auf Kontaktpads und von dort durch Federkontakte auf das als Kunststoffteil mit eingelegten Metallbahnen ausgeführte Fixierglied 17 erfolgen. Über die eingelegten Metallbahnen im Fixierglied 17 werden die Sensorsignale an den Stecker 15 übertragen. Zur Aufnahme des Steckers 15 ist in der hier dargestellten Ausführungsform eine Ausnehmung 29 im oberen Gehäuseteil 26 ausgebildet

Zur Übertragung des Stroms an den Glühstift 2 ist der Zwischenring 14 vorzugsweise zum unteren Gehäuseteil 25 hin isoliert und zum Glühstift 2 hin elektrisch leitfähig.

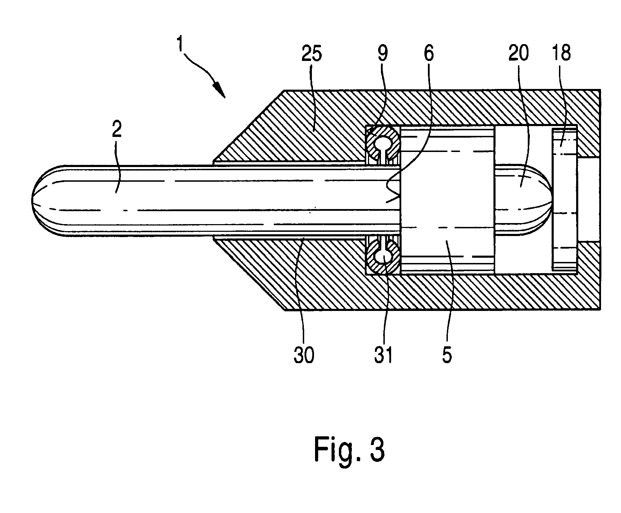

Figur 3 zeigt eine schematische Darstellung des unteren Teils einer Glühstiftkerze in einer dritten Ausführungsform.

Die in Figur 3 dargestellte Ausführungsform unterscheidet sich von der in den Figuren 1 und 2 dargestellten durch die Geometrie des Dichtungselements 3. Die veränderte Geometrie des Dichtungselements 3 ist sowohl bei brennraumzugewandter als auch bei brennraumabgewandter Montage des Drucksensors 18 einsetzbar.

Zur Messung des Drucks im Brennraum bewegt sich der Glühstift 2 in Richtung des Drucksensors 18. Hieraus resultiert eine Relativbewegung zwischen Glühstift 2 und unterem Gehäuseteil 25. Aufgrund dieser Bewegung treten in einer als Dichtungselement 3 verwendeten Graphithülse Reibungseffekte auf, die zu einer Hysterese bei der Druckmessung führen und damit das Drucksignal unbrauchbar machen.

Um zu vermeiden, dass das Sensorsignal aufgrund einer Hysterese unbrauchbar wird, wird entsprechend der in Fig. 3 dargestellten Ausführungsform ein elastisches Dichtungselement 31 verwendet. Das elastische Dichtungselement 31 ist z.B. ein elastischer Metallring. Die Montage des Glühstifts 2 mit dem elastischen Dichtungselement 31 erfolgt analog der Montage mit der Graphithülse als Dichtungselement 3. Bei der Montage bildet sich zwischen dem unteren Gehäuseteil 25 und dem Glühstift 2 ein Spalt 30 aus. Über den Spalt 30 können Brenngase aus dem Brennraum in die Glühstiftkerze 1 gelangen. Die Abdichtung des Innenraums der Glühstiftkerze 1 mit dem elastischen Dichtungselement 31 erfolgt über die Anschlagfläche 9 am unteren Gehäuseteil 25 und die Stirnseite 6 der stufenförmigen Erweiterung 5, gegen welche sich das elastische Dichtungselement 31 abstützt Durch Aufbringen einer Vorspannkraft auf den Glühstift 2 wird eine gas- und druckdichte Verbindung erreicht

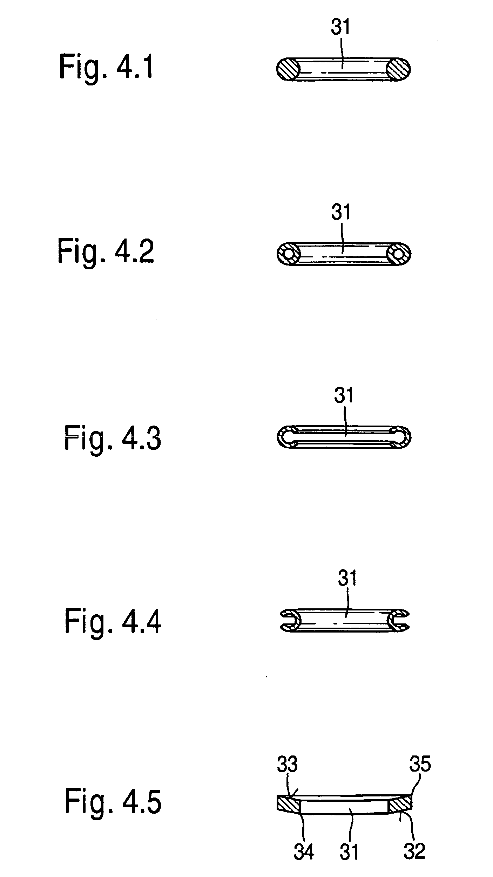

In den Figuren 4.1 bis 4.5 sind verschiedene Ausführungsformen des elastischen Dichtungselements 31 dargestellt

Bei der in Figur 4.1 dargestellten Ausführungsform ist das elastische Dichtungselement 31 mit einem kreisförmigen Vollquerschnitt ausgebildet. Die elastische Wirkung des Dichtungselements 31 resultiert hier ausschließlich aus der Elastizität des Werkstoffes, aus welchem das elastische Dichtungselement 31 gefertigt ist. Als elastische Werkstoffe eignen sich vorzugsweise Metalle, die gegen die hohen im Brennraum auftretenden Drücke beständig sind. Geeignete Metalle sind solche, die weicher sind als der Gehäusewerkstoff. Das Gehäuse 4 wird vorzugsweise aus Stahl gefertigt. Geeignete Werkstoffe für das elastische Dichtungselement 31 sind zum Beispiel Kupfer oder Messing.

Figur 4.2 zeigt ein elastisches Dichtungselement 31 mit einem Hohlquerschnitt. Im Unterschied zu der in Figur 4.1 dargestellten Ausführungsform ist der Querschnitt des elastischen Dichtungselements 31 hier nicht massiv ausgeführt. Aufgrund des Hohlquerschnitts lässt sich das elastische Dichtungselement 31 stärker verformen als das elastische Dichtungselement 31 mit Vollquerschnitt

In den Figuren 4.3 und 4.4 ist das elastische Dichtungselement 31 mit einem C-Profil ausgeführt. Bei der in Figur 4.3 dargestellten Ausführungsform ist das C-Profil nach innen hin offen, bei der in Figur 4.4 dargestellten Ausführungsform nach außen. Ebenso wie bei dem elastischen Dichtungselement 31 mit Hohlquerschnitt ist auch bei dem elastischen Dichtungselement 31 mit C-Profil eine stärkere elastische Verformung möglich als bei einem elastischen Dichtungselement 31 mit Vollquerschnitt.

Bei der in Figur 4.5 dargestellten Ausführungsform ist das elastische Dichtungselement 31 als Tellerfeder ausgebildet Bei der Montage des als Tellerfeder ausgebildeten elastischen Dichtungselements 31 ist darauf zu achten, dass die Vorspannkraft nicht so groß gewählt wird, dass das elastische Dichtungselement 31 mit den Flächen 32 und 33 an der Anschlagfläche 9 und der Stirnseite 6 der stufenförmigen Erweiterung 5 anliegt, sondern nur mit den Kanten 34 und 35.

### Bezugszeichenliste

- 1: Glühstiftkerze
- 2: Glühstift
- 3: Dichtungselement
- 4: Gehäuse
- 5: stufenförmige Erweiterung
- 6: Stirnseite der stufenförmigen Erweiterung 5
- 7: Stirnseite des Dichtungselements 3
- 8: zweite Stirnseite des Dichtungselements 3
- 9: Anschlagfläche
- 10: zweite Stirnseite der stufenförmigen Erweiterung 5
- 11: Glühspitze
- 12: Umfangsfläche des Dichtungselements 3
- 13: Innenwand des Dichtungselements 3
- 14: Zwischenring
- 15: Stecker
- 16: Zuleitung
- 17: Fixierglied
- 18: Drucksensor
- 19: Träger
- 20: Zapfen
- 21: Datenleitung
- 22: Nut im Stecker 15
- 23: Dichtring
- 24: Einschnürstelle
- 25: unteres Gehäuseteil
- 26: oberes Gehäuseteil
- 27: Teilungsstelle
- 28: Membran
- 29: Ausnehmung
- 30: Spalt
- 31: elastisches Dichtungselement
- 32, 33: Flächen
- 34, 35: Kanten

## Patentansprüche

1. Vorrichtung zur Erfassung des Drucks in einem Brennraum einer selbstzündenden Verbrennungskraftmaschine, bei der ein Drucksensor (18) in einer Glühstiftkerze (1), einen Glühstift (2) und ein Fixierglied (17) in einem Gehäuse (4) umfassend, aufgenommen ist, wobei der Drucksensor (18) am Fixierglied (17) des Glühstiftes (2) angeordnet ist, und wobei in den Drucksensor (18) eine Auswerteschaltung integriert ist, **dadurch gekennzeichnet, dass** der Drucksensor (18) ein piezoresistiver Silizium-Druckmesschip ist und dass das Gehäuse (4) der Glühstiftkerze (1) auf der brennraumabgewandten Seite hinter dem Drucksensor (18) in ein unteres Gehäuseteil (25) und ein oberes Gehäuseteil (26) geteilt ist, damit der Drucksensor (18) bei geöffnetem Gehäuse (4) leicht zugänglich ist.

2. Vorrichtung nach Anspruch 1, **dadurch gekennzeichnet, dass** der Drucksensor (18) brennraumzugewandt aufgenommen ist.

3. Vorrichtung nach Anspruch 1, **dadurch gekennzeichnet, dass** der Drucksensor (18) brennraumabgewandt aufgenommen ist.

4. Vorrichtung nach Anspruch 2, **dadurch gekennzeichnet, dass** der Drucksensor (18) auf einem Träger (19) aufgebracht ist.

5. Vorrichtung nach einem der Ansprüche 1 bis 4, **dadurch gekennzeichnet, dass** zwischen dem Glühstift (2) und dem Gehäuse (4) der Glühstiftkerze (1) ein elastisches Dichtungselement (31) angeordnet ist.

6. Vorrichtung nach Anspruch 5, **dadurch gekennzeichnet, dass** das elastische Dichtungselement (31) ein elastischer Metallring ist.

## Claims

1. Device for detecting the pressure in a combustion chamber of an auto-ignition internal combustion engine, in which device a pressure sensor (18) is accommodated in a pencil-type heater plug (1) comprising a pencil-type heater element (2) and a fixing member (17) in a housing (4), wherein the pressure sensor (18) is arranged on the fixing member (17) of the pencil-type heater element (2), and wherein an evaluation circuit is integrated in the pressure sensor (18), **characterized in that** the pressure sensor (18) is a piezoresistive silicon pressure measurement chip, and **in that** the housing (4) of the pencil-type heater plug (1) is divided, on the side facing away from the combustion chamber and behind the pressure sensor (18), into a lower housing part (25) and an upper housing part (26) such that the pressure sensor (18) is easily accessible when the housing (4) is open.

2. Device according to Claim 1, **characterized in that** the pressure sensor (18) is accommodated so as to face towards the combustion chamber.

3. Device according to Claim 1, **characterized in that** the pressure sensor (18) is accommodated so as to face away from the combustion chamber.

4. Device according to Claim 2, **characterized in that** the pressure sensor (18) is mounted on a support (19).

5. Device according to one of Claims 1 to 4, **characterized in that** an elastic seal element (31) is arranged between the pencil-type heater element (2) and the housing (4) of the pencil-type heater plug (1).

6. Device according to Claim 5, **characterized in that** the elastic seal element (31) is an elastic metal ring.

## Revendications

1. Dispositif pour détecter la pression dans une chambre de combustion d'un moteur à combustion interne à auto-allumage, dans lequel un capteur de pression (18) est reçu dans une bougie de préchauffage (1), comprenant un crayon de préchauffage (2) et un organe fixe (17) dans un boîtier (4), le capteur de pression (18) étant disposé sur l'organe fixe (17) du crayon de préchauffage (2), et un circuit d'analyse étant intégré dans le capteur de pression (18), **caractérisé en ce que** le capteur de pression (18) est une puce de mesure de pression au silicium piézorésistante et **en ce que** le boîtier (4) de la bougie de préchauffage (1) est divisé du côté opposé à la chambre de combustion derrière le capteur de pression (18) en une partie de boîtier inférieure (25) et une partie de boîtier supérieure (26), afin que le capteur de pression (18) soit facilement accessible lorsque le boîtier (4) est ouvert.

2. Dispositif selon la revendication 1, **caractérisé en ce que** le capteur de pression (18) est reçu en position tournée vers la chambre de combustion.

3. Dispositif selon la revendication 1, **caractérisé en ce que** le capteur de pression (18) est reçu en position détournée de la chambre de combustion.

4. Dispositif selon la revendication 2, **caractérisé en ce que** le capteur de pression (18) est monté sur un support (19).

5. Dispositif selon l'une quelconque des revendications 1 à 4, **caractérisé en ce qu'**un élément d'étanchéité élastique (31) est disposé entre le crayon de préchauffage (2) et le boîtier (4) de la bougie de préchauffage (1).

6. Dispositif selon la revendication 5, **caractérisé en ce que** l'élément d'étanchéité élastique (31) est une bague élastique en métal.
